# EUROPEAN PATENT SPECIFICATION

(11) **EP 3 329 137 B1**
(45) Date of publication and mention of the grant of the patent: **24.04.2019**
(21) Application number: 16804942.7
(22) Date of filing: 01.11.2016
(51) Int. Cl.: F16C 35/073, F16D 1/096, F16C 19/06, F16D 1/094

(54) **FIXING OF A BALL BEARING ON A SHAFT WITH INTERPOSITION OF A CONICAL SLEEVE**
BEFESTIGUNG EINES KUGELLAGERS AUF EINER WELLE MIT ZWISCHENSCHALTUNG EINER KONISCHEN HÜLSE
FIXATION D'UN ROULEMENT À BILLES SUR UN ARBRE AVEC INTERPOSITION D'UNE DOUILLE CONIQUE

(30) Priority: 20.07.2016 TR 201610096
(43) Date of publication of application: 06.06.2018
(73) Proprietor: Ortadogu Rulman Sanayi Ve Ticaret Anonim Sirketi, 06901 Ankara (TR)
(72) Inventor: MERDANE, Hamdullah, 06900 Ankara (TR); SAYDEMIR, Nazmi, 06900 Polatli/Ankara (TR)
(74) Representative: Berkkam, Ayfer
(86) International application number: PCT/TR2016/050417
(87) International publication number: WO 2018/017030

(56) References cited:
- BE-A- 533 092
- CN-A- 104 963 955
- DE-A1-102012 221 232
- DE-C- 131 448
- DE-U- 7 131 568
- DE-U- 7 147 440
- GB-A- 157 937
- GB-A- 190 215 132
- JP-A- 2009 138 765
- US-A- 5 228 787

## Description

### Technical Field

The invention is related to a ball bearing which can be quickly and easily fixed onto a shaft.

The invention is particularly related to an inner race having a conic inner surface in order for it to be fixed onto a shaft and a ball bearing comprising a conical bushing with orifices is placed such that it corresponds to said conical surface.

### Prior Art

Generally in order to fix ball bearings onto a shaft, methods such as opening a screw thread or a groove or a channel are used. Besides these some other parts which are hooked on the shaft in order to keep the ball bearing and the shaft together, are used in order to integrate the shaft and the ball bearing. In some methods, said integrated systems are used only at one of the ends of the shaft. Deformations occur on the shaft due to the grooves opened on the shaft following said methods. At the same time, the mounting and dismantling of the ball bearings that need to be moved on the shaft is a time consuming process and in the methods where only the ends of the shaft is used the ball bearings cannot be fixed to other desired locations. Due to these reasons, certain solutions have been developed in the art.

According to the Chinese patent document with the application number CN2797742Y within the state of the art, a ball bearing system which is a locking disc which provides the race to be fixed onto the shaft where the inner race is coupled by means of the locking tabs that can be mounted onto the shaft is described.

According to the Chinese patent document with the application number CN104747598A within the state of the art, a ball bearing which can be fixed or locked onto the shaft by means of a locking ring that is connected to the shaft and a side wall of the inner race is described.

According to the Chinese patent document with the application number CN201934523U within the state of the art, a ball bearing locking system formed with the locking disc that is responsible of the locking function of the inner race onto the shaft is described.

Document DE 10 2012 221 232 A1 discloses a ball bearing with the features of the preamble of claim 1, comprising an inner race, a conical bushing with a slot and a nut cooperating with threads on the outer surface of the inner ring.

A locking system which can be easily fixed onto the shaft, shall not lead to said deformations on the shaft and at the same time it shall save time during the mounting and dismantling of the ball bearing.

Therefore a need for the development of a ball bearing that can be fixed onto or released from a shaft at any location desired on the shaft has risen.

### Objects and Brief Description of the Invention

The object of the invention is to provide a ball bearing that can be quickly and easily fixed onto and released from shaft.

The object of the invention is to provide a ball bearing that can be quickly and easily fixed onto and released from shaft on any location on the shaft.

According to the invention there is provided a ball bearing with the features of claim 1.

Said ball bearing, comprises
- a conical inner race, having a geometrical inner structure, which shall be fixed to the shaft by interlocking with the conical bushing,
- a conical bushing that shall create pressure onto the shaft by narrowing when it moves inside the inner race,
- orifices located on the conical bushing, which enable the conical bushing to become narrow and to create pressure onto the shaft.

The conical bushings in said ball bearing, are moved into the inner race which has a conical inner surface. When the conical surfaces come in contact with each other, the conical bushing is moved forward and the conical bushing becomes narrow and applies pressure onto the shaft. By this means the ball bearing is fixed onto the shaft. When the conical bushing is pulled out of the inner race, the conical bushing shall expand and therefore the ball bearing shall be loosened from the shaft.

### Detailed Description of the Invention

The parts of the ball bearing that have been provided in order to reach the objects of the invention have been illustrated in the attached figures.

According to said figures;
Figure 1, is the blown up perspective view of a ball bearing which is not in accordance with the invention.
Figure 2, is a section view of the ball bearing of figure 1.
Figure 3, is the blown up perspective view of an embodiment of the ball bearing subject to the invention.
Figure 4, is a section view of the ball bearing subject to the invention.
Figure 5, is the blown up perspective view of another embodiment of a ball bearing which is not in accordance with the invention.
Figure 6, is a section view of the ball bearing of figure 5.

The parts in the figures have each been numbered and the references of each number have been provided below.
**1.** Conical inner race
**2.** Cylindrical inner race
**3.** Conical Bushing I
**4.** Conical Bushing II
**5.** Conical Bushing III
**6.** Cylindrical bushing
**7.** Orifice
**8.** Nut
**9.** Screws
**10.** Wrench flat
**11.** Wrench flat located on the inner race
**12.** Crescent wrench opening
**13.** Screw threads

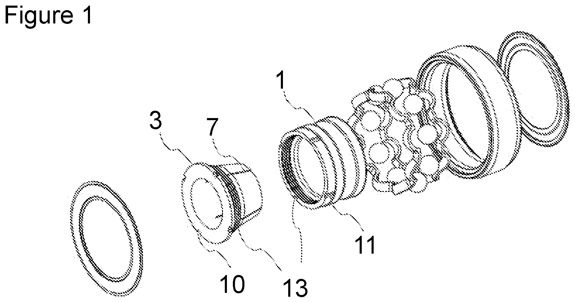

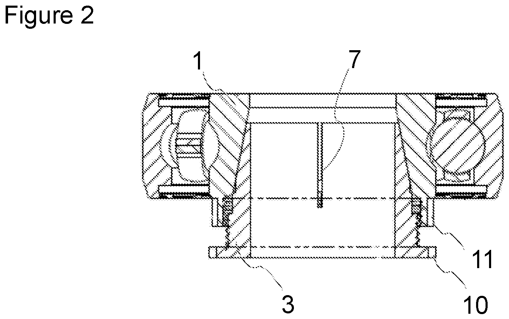

The illustrative ball bearing of figures 1 and 2, comprises
- a conical inner race (1),which shall be fixed to the shaft by interlocking with the conical bushing I (3),
- conical bushing I (3) which is cylindrical inside and partially conical and cylindrical on the outside, which shall apply pressure on the shaft by narrowing when moved inside the conical inner race (1) and which has an orifice (7) on the cylindrical inner section.
- orifices (7) located on the conical bushing I (3) which enable the conical bushing I (3) to narrow down when the conical bushing I (3) moves into the conical inner race (1).

The ball bearing of figures 1 and 2 comprises screw threads (13) located on the outer surface of the conical bushing I (3) and the front surface of the conical inner race (1).

The ball bearing of figures 1 and 2 comprises a wrench flat (10) opened on the conical bushing I (3).

The ball bearing of figures 1 and 2 comprises a wrench flat (11) on the inner race opened on the conical inner race (1).

The ball bearing according to this illustrative embodiment comprises screw threads (13) located on the outer surface of the conical bushing I (3) and the front surface of the conical inner race (1). The conical bushing I (3) shall move into the conical inner race (1) when the conical bushing I (3) is rotated and gets narrower by means of the orifices (7) and applies pressure on the shaft. When the conical bushing I (3) rotate in the opposite direction, the conical bushing I (3) shall expand and the ball bearing shall loosen on the shaft. (Figure -1 and Figure -2)

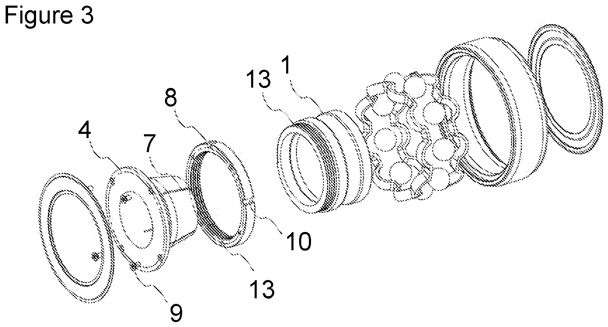

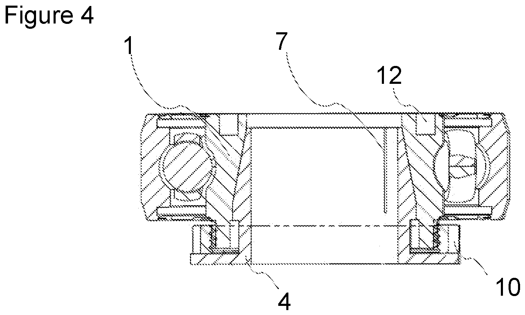

A ball bearing in accordance with the invention is depicted in figures 3 and 4.

The ball bearing subject to the invention, comprises,
- a conical inner race (1) having screw threads (13) on the external front surface, which shall be fixed to a shaft by interlocking with a conical bushing II (4),
- a conical bushing II (4) which is cylindrical inside and conical on the outside, which shall apply pressure on the shaft by narrowing when moved inside the conical inner race (1) and which has an orifice (7) on the cylindrical inner section,
- a nut (8) which shall fix the conical bushing II (4) to the screw threads (13) located on the external front surface of the conical inner race (1),
- orifices (7) located on the conical bushing II (4) which enable the conical bushing II (4) to narrow down when the conical bushing II (4) moves into the conical inner race (1), and
- screws (9) located on the conical bushing II (4), which couple the conical bushing II (4) and the nut (8).

The ball bearing subject to the invention, may comprise a wrench flat (10) opened on the nut (8).

The ball bearing subject to the invention, may comprise crescent wrench opening (12) into the side surface of the conical inner race (1), into the which crescent wrench is placed in order to prevent the conical inner race (1) from turning.

According to the embodiment of the invention, the conical bushing II (4) are coupled to the nut (8) by means of screws (9). The conical bushing II (4) is placed such that it can be inserted into the conical inner race (1). The screw threads (13) located in the inner surface of the nut (8) shall be fitted into the screw threads (13) on the external surface of the conical inner race (1) and the nut shall start to be turned. When the nut (8), therefore the conical bushing II (4) starts turning, the conical bushing II (4) starts to move into the conical inner race (1). The conical surface inside the conical inner race (1) and the conical inner surface of the conical bushing II (4) coincide with each other. By this means when the conical bushing II (4)moves inside the inner race (1), it gets narrower due to the orifices (7) and therefore applies force on the shaft. When the nut (8) and therefore the conical bushing II (4) rotate in the opposite direction, the conical bushing II (4) shall expand and the ball bearing shall loosen on the shaft. (Figure - 3 and Figure -4)

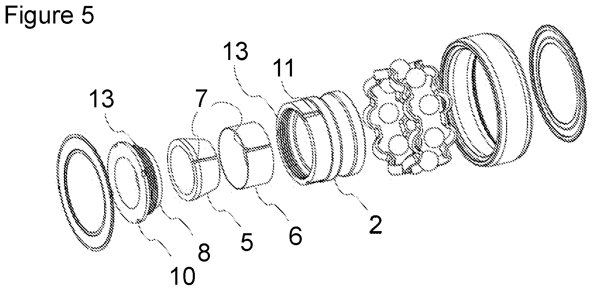

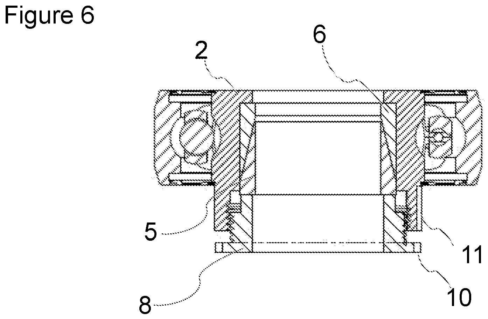

The illustrative ball bearing of figures 5 and 6, comprises,
- a cylindrical inner race (2) that is to be fixed to the shaft by interlocking with the cylindrical bushing (6),
- cylindrical bushing (6) that is to be fitted inside the cylindrical inner race (2) whose inner surface is conical and external surface is cylindrical,
- a conical bushing III (5) which is conical on the outside and cylindrical in the inside, which gets narrower and applies pressure on the shaft, when moved into the cylindrical bushing (6),
- orifices (7) located on the conical bushing III (5) which enable the conical bushing III (5) to get narrow when the conical bushing III (5) moves into the cylindrical inner race (6).

The ball bearing of figures 5 and 6 comprises a nut (8) having screw threads (13) on its external surface, which fixes the cylindrical bushing (6) on the cylindrical inner race (2) with screw threads (13) located on the inner front surface of the cylindrical inner race (2) and the conical bushing III (5).

The ball bearing of figures 5 and 6 comprises a wrench flat (10) opened on the nut (8).

The ball bearing of figures 5 and 6 comprises a wrench flat (11) on the inner race opened on the cylindrical inner race (2).

A cylindrical inner race (2) is used in this illustrative embodiment. The conical bushing III (5) gets narrower by means of the orifices (7), as it moves further into the cylindrical bushing (6). The insertion of the conical bushing III (5) into the cylindrical bushing (6) is enabled by rotating the nut (8) to be turned toward the cylindrical inner race (2). In this embodiment screw threads (13) are provided on the external surface of the nut (8) and the inner surface of the cylindrical inner race (2). (Figure -5 and Figure -6)

In the ball bearing of figures 1 and 2 , a wrench flat (10) opened on the nut (8) and the conical bushing I (3) is provided. Said wrench openings (10) are used to turn the conical bushing I (3) or the nut (8). Similarly, a wrench flat (11) located on the inner race which has been opened on the cylindrical inner race (2) and the conical inner race (1) or a crescent wrench opening (12) opened on the conical inner race (1) is provided. The wrench flat (11) located on the conical inner race (1) and the crescent wrench opening (12) opened on the conical inner race (1) enable the conical inner race (1) and the cylindrical inner race (2) to stay fixed without turning. (Figure -2,Figure 4 and Figure -6)

## Claims

1. A ball bearing that comprises;
- **a conical inner race** (1) having screw threads (13) on the external front surface, which shall be fixed to a shaft by interlocking with a conical bushing II (4),
- a **conical bushing II (4)** which is cylindrical inside and conical on the outside, which shall apply pressure on the shaft by narrowing when moved inside the conical inner race (1) and which has an orifice (7) on the cylindrical inner section,
- **a nut (8)** which shall fix the conical bushing II (4) to the screw threads (13) located on the external front surface of the conical inner race (1), and
- **orifices (7)** located on the conical bushing II (4) which enable the conical bushing II (4) to narrow down when the conical bushing II (4) moves into the conical inner race (1),
**characterized in that** the ball bearing further comprises **screws (9)** located on the conical bushing II (4), which couple the conical bushing II (4) and the nut (8).

2. A ball bearing according to claim 1, **characterized in that** it comprises a **wrench flat (10)** opened on the nut (8).

3. A ball bearing according to claim 1, **characterized in that** it comprises a **crescent wrench opening (12)** into the side surface of the conical inner race (1), into which crescent wrench is placed in order to prevent the conical inner race (1) from turning.

## Patentansprüche

1. Kugellager, das umfasst;
- **einen konischen Innenring** (1) mit Gewinde (13) auf der äußeren Stirnfläche, der an einer Welle durch Verzahnung mit einer konischen Buchse II (4) befestigt werden soll,
- **eine konische Buchse II (4),** die innen zylindrisch und außen konisch ist, die bei Bewegung innerhalb des konischen Innenrings (1) Druck auf die Welle durch Verengung ausüben soll und eine Öffnung (7) am zylindrischen Innenabschnitt aufweist,
- **eine Mutter (8),** die die konische Buchse II (4) an den Gewinden (13) befestigt, die sich auf der äußeren Stirnfläche des konischen Innenrings (1) befinden, und
- **Öffnungen (7)** an der konischen Buchse II (4), die es der konischen Buchse II (4) ermöglichen, sich zu verengen, wenn sich die konische Buchse II (4) in den konischen Innenring (1) bewegt,
**dadurch gekennzeichnet, dass** das Kugellager ferner **Schrauben (9)** umfasst, die sich an der konischen Buchse II (4) befinden, die die konische Buchse II (4) und die Mutter (8) verbinden.

2. Kugellager nach Anspruch 1, **dadurch gekennzeichnet, dass** es eine **Schlüsselfläche (10)** umfasst, die an der Mutter (8) geöffnet ist.

3. Kugellager nach Anspruch 1, **dadurch gekennzeichnet, dass** es eine **Sichelschlüsselöffnung (12)** in die Seitenfläche der konischen Innenring (1) aufweist, in die ein Sichelschlüssel eingesetzt ist, um ein Drehen der konischen Innenring (1) zu verhindern.

## Revendications

1. Roulement à billes qui comprend ;
- **une bague intérieure conique (1)** ayant des filets de vis (13) sur la surface frontale extérieure, qui doit être fixée à un arbre par verrouillage avec une douille conique II (4),
- **une douille conique II (4)** cylindrique à l'intérieur et conique à l'extérieur, qui applique une pression sur l'arbre en se rétrécissant lorsqu'elle est déplacée à l'intérieur de la bague intérieure conique (1) et qui présente un orifice (7) sur la section intérieure cylindrique,
- **un écrou (8)** qui fixe la douille conique II (4) sur les filets de vis (13) situés sur la surface frontale externe de la bague intérieure conique (1), et
- **des orifices (7)** situés sur la douille conique II (4) qui permettent à la douille conique II (4) de se rétrécir lorsque la douille conique II (4) entre dans la bague intérieure conique (1),
**caractérisé en ce que** le roulement à billes comprend en outre des **vis (9)** situées sur la douille conique II (4), qui couplent la douille conique II (4) et l'écrou (8).

2. Roulement à billes selon la revendication 1, **caractérisé en ce qu'**il comprend une **clé plate (10)** ouverte sur l'écrou (8).

3. Roulement à billes selon la revendication 1, **caractérisé en ce qu'**il comprend une **ouverture de clé en forme de croissant (12)** dans la surface latérale de la bague intérieure conique (1), dans laquelle une clé en forme de croissant est placée afin d'empêcher la bague intérieure conique (1) de tourner.
